# EUROPEAN PATENT SPECIFICATION

(11) **EP 3 242 564 B1**
(45) Date of publication and mention of the grant of the patent: **04.08.2021**
(21) Application number: 16701690.6
(22) Date of filing: 05.01.2016
(51) Int. Cl.: A23C 3/03, A23C 9/123, A23C 9/12, A23C 17/00, A23L 3/16, A23L 9/10, A23L 19/00, A23L 33/21, A23C 9/133, A23C 9/137, A23C 9/154, A23C 13/12, A23L 13/40, A23L 29/206, A23L 33/00

(54) **METHOD OF PRODUCING SMOOTH SHELF-STABLE PRODUCTS**
VERFAHREN ZUR HERSTELLUNG VON GLATTEN, HALTBAREN PRODUKTEN
MÉTHODE DE PRODUCTION DE PRODUITS LISSES DE LONGUE CONSERVATION

(30) Priority: 05.01.2015 US 201562099705 P
(43) Date of publication of application: 15.11.2017
(73) Proprietor: Société des Produits Nestlé S.A., 1800 Vevey (CH)
(72) Inventor: GRAF, Eric Edward, Holton, Michigan 49413 (US)
(74) Representative: Rupp, Christian
(86) International application number: PCT/IB2016/050041
(87) International publication number: WO 2016/110803

(56) References cited:
- WO-A1-2005/039316
- WO-A1-2007/003391
- WO-A1-2008/062057
- WO-A1-2011/147707
- WO-A1-2013/167606
- WO-A2-2010/093864
- US-A1- 2005 089 620
- US-A1- 2006 210 668
- US-A1- 2010 173 046
- US-B1- 6 890 578
- Christian Basi: "Adding Citrus Fiber to Meatballs Improves Nutritional Quality - Disabled World", , 15 October 2013 (2013-10-15), XP055258694, Retrieved from the Internet: URL:http://www.disabled-world.com/fitness/ citrus-fiber.php [retrieved on 2016-03-16]

## Description

### BACKGROUND

Many types of refrigerated products are currently on the market. By using refrigeration, food products can avoid spoiling for extended periods of time. However, food products that require refrigeration are more costly to store than non-refrigerated foods due to the energy costs associated with keeping the food products cold and/or the logistics involved in transporting the food products at a lower temperature.

Shelf-stable foods are foods that would normally need to be stored using refrigeration systems but have been processed so that they can be safely stored at room/ambient temperature and maintain a long shelf life. Various techniques exist to process foods so that they are shelf-stable - one of which is aseptically thermally processing the food product using heat. However, such a method has been found to result in unsatisfactory (i.e., unappetizing) textural features for certain food products, e.g., yogurt and pudding, due to the proteins therein denaturing and coagulating during aseptic thermal processing. As such, there is a need for a method to produce a food product that minimizes and/or counteracts the effect(s) of the denatured, coagulated proteins on the textural features (e.g., smoothness) of aseptically thermally processed food products so as to produce a shelf-stable food product that is appealing to a consumer and does not need refrigeration.

Shelf-stable food products are disclosed in US2010/173046 A1, WO2010/093864 A2, WO2008/062057 A1, WO2007/003391 A1, WO2005/039316 A1, US2005/089620 A1, WO2011/147707 A1, US 2006/210668 A1, and US 6 890 578 B1.

### DETAILED DESCRIPTION

Unless otherwise defined herein, technical terms used in connection with the disclosure shall have the meanings that are commonly understood by those of ordinary skill in the art. Further, unless otherwise required by context, singular terms shall include pluralities and plural terms shall include the singular.

All patents, published patent applications, and non-patent publications mentioned in the specification are indicative of the level of skill of those skilled in the art to which this disclosure pertains.

All of the articles and/or methods disclosed herein can be made and executed without undue experimentation in light of the present disclosure.

As utilized in accordance with the present disclosure, the following terms, unless otherwise indicated, shall be understood to have the following meanings:

The use of the word "a" or "an" when used in conjunction with the term "comprising" in the claims and/or the specification may mean "one," but it is also consistent with the meaning of "one or more," "at least one," and "one or more than one." The use of the term "or" in the claims is used to mean "and/or" unless explicitly indicated to refer to alternatives only or that the alternatives are mutually exclusive, although the disclosure supports a definition that refers to only alternatives and "and/or." Throughout this application, the term "about" is used to indicate that a value includes the inherent variation of error for the device, the method being employed to determine the value, or the variation that exists among the study subjects. For example, but not by way of limitation, when the term "about" is utilized, the designated value may vary by plus or minus twelve percent, or eleven percent, or ten percent, or nine percent, or eight percent, or seven percent, or six percent, or five percent, or four percent, or three percent, or two percent, or one percent. The use of the term "at least one" will be understood to include one as well as any quantity more than one, including but not limited to, 2, 3, 4, 5, 10, 15, 20, 30, 40, 50, 100, etc. The term "at least one" may extend up to 100 or 1000 or more, depending on the term to which it is attached; in addition, the quantities of 100/1000 are not to be considered limiting, as higher limits may also produce satisfactory results. In addition, the use of the term "at least one of X, Y, and Z" will be understood to include X alone, Y alone, and Z alone, as well as any combination of X, Y, and Z. The use of ordinal number terminology (i.e., "first," "second," "third," "fourth," etc.) is solely for the purpose of differentiating between two or more items and is not meant to imply any sequence or order or importance to one item over another or any order of addition, for example.

As used in this specification and claim(s), the words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The term "or combinations thereof" as used herein refers to all permutations and combinations of the listed items preceding the term. For example, "A, B, C, or combinations thereof" is intended to include at least one of: A, B, C, AB, AC, BC, or ABC, and if order is important in a particular context, also BA, CA, CB, CBA, BCA, ACB, BAC, or CAB. Continuing with this example, expressly included are combinations that contain repeats of one or more items or terms, such as BB, AAA, AAB, BBC, AAABCCCC, CBBAAA, CABABB, and so forth. The skilled artisan will understand that typically there is no limit on the number of items or terms in any combination, unless otherwise apparent from the context.

As used herein, the term "substantially" means that the subsequently described event or circumstance completely occurs or that the subsequently described event or circumstance occurs to a great extent or degree. For example, when associated with a particular event or circumstance, the term "substantially" means that the subsequently described event or circumstance occurs at least 80% of the time, or at least 85% of the time, or at least 90% of the time, or at least 95% of the time. The term "substantially adjacent" may mean that two items are 100% adjacent to one another, or that the two items are within close proximity to one another but not 100% adjacent to one another, or that a portion of one of the two items is not 100% adjacent to the other item but is within close proximity to the other item.

The term "associate" as used herein will be understood to refer to the direct or indirect connection of two or more items.

The term "shelf-stable" as used herein refers to the ability of a food product to be safely stored and sold in a sealed container at room temperature while still having a useful shelf life in which the taste and nutritional aspects (i.e., nutritional integrity, nutritional potency, etc.) of the product is retained. Examples of periods considered to be a "useful shelf life" include, but are not limited to, at least about two months, at least about three months, at least about four months, at least about five months, at least about six months, and longer.

The phrase "food product" as used herein refers to the combination of at least one shear sensitive thickener and at least one food component like, for example but without limitation, a dairy product, a meat product, and/or a vegetable product. The phrase "food product" may also include any additives in addition to the combination of the at least one shear sensitive thickener and the at least one food component.

As used herein, the phrase "high in protein content" and variations of such refers to a food product and/or food component having a protein content of 2 wt% or greater of the food product and/or food component. Additionally, as used herein, "highly fortified food products," "highly fortified dairy products," "highly fortified food components," and variations thereof refers to food products and/or food components that have been fortified with at least one of a vitamin and a mineral such that the vitamin and/or mineral comprises more than 5% daily value equivalent of one or more vitamins and/or minerals, or such that the vitamin(s) and/or mineral(s) comprises more than a 10% daily value equivalent of one or more vitamins and/or minerals.

The invention is defined by the appended claims. Other aspects disclosed are not according to the invention and are present for illustration only. Turning now to the disclosure, certain aspects thereof are directed to a method of producing a smooth, shelf-stable aseptically processed food product that addresses texture defects in food products in the prior art caused by protein denaturation and coagulation during aseptic thermal processing. Certain other aspects of the disclosure are directed to a smooth, shelf-stable aseptically thermally processed food product, for example but without limitation, a smooth, shelf-stable aseptically thermally processed dairy product, and packages thereof for retail. Yet other aspects of the disclosure are directed to a smooth, shelf-stable aseptically thermally processed food product that is high in protein and/or high in fortification with vitamin(s) and/or mineral(s).

The invention is directed to a method of producing a smooth, shelf-stable food product, which is shelf-stable for at least two months comprising: aseptically thermally processing a mixture comprising at least one food component and at least one shear sensitive thickener; at least partially cooling the mixture after the step of aseptically thermally processing the mixture; and aseptically homogenizing the mixture after the step of cooling the mixture, the obtained mixture being the food product.

According to the invention the at least one food component is a dairy product
selected from the group consisting of pudding, yogurt, sour cream, buttermilk, and combinations thereof.

According to the invention the food component has a "high protein content," wherein the protein content is about 2 wt% or greater of the food component and/or the food product. Food components with a high protein content are susceptible to protein denaturing and/or coagulating during aseptic thermal processing, which causes textural defects to the resulting thermally processed food component. It has been found, as disclosed and/or claimed herein, that the use of a shear sensitive thickener during aseptic homogenization creates a food product that is smoother than high protein-containing food components that have been aseptically thermally processed without such a shear sensitive thickener present during aseptic homogenization. According to the invention the shear sensitive thickener is citrus fiber. Shear sensitive thickeners like citrus fiber thicken under shear, for example but without limitation, aseptic homogenization, and provide a smoother food product by countering the textural defects caused by protein coagulation during aseptic thermal processing of food components.

According to the invention the step of aseptically thermally processing the mixture comprises heating the mixture at a temperature in a range of from 132.2°C (270°F) to 143.3°C (290°F).

According to the invention the mixture is at least partially cooled to a temperature in a range of from 48.9°C (120°F) to 71.1°C (160°F).

In one embodiment of the invention, the food component is a baby food, wherein the baby food may be any of the above-described food components. Additionally, in an embodiment according to the invention, the food component may be fortified with at least one vitamin and/or mineral. The fortified food component may be fortified such that the food component comprises more than 5% daily value equivalent of the at least one vitamin and/or mineral, and/or more than 10% daily value equivalent of the at least one vitamin and/or mineral. The vitamin may include, for example but without limitation, Vitamins A, B-complex (such as B-1, B-2, B-6, and B-12), C, D, E, and K, niacin, acid vitamins such as pantothenic acid and folic acid, and biotin. The mineral may include, for example but without limitation, calcium, iron, zinc, magnesium, iodine, copper, phosphorus, manganese, potassium, chromium, molybdenum, selenium, nickel, tin, silicon, vanadium, and/or boron.

In an embodiment the food product, may further comprise one or more additives including, for example but without limitation, sweeteners, flavors, colors, acids, acidity regulators, anticaking agents, antifoaming agents, antioxidants, bulking agents, color retention agents, emulsifiers, flavor enhancers, flour treatment agents, glazing agents, humectants, preservatives, stabilizers, thickeners, and/or combinations thereof.

Any amounts of the shear sensitive thickener and food component may be combined together, so long as the smooth, shelf-stable food product can be formed therefrom. For example, but not by way of limitation, the shear sensitive thickener may be present at about 0.001 wt%, about 0.002 wt%, about 0.003 wt%, about 0.004 wt%, about 0.005 wt%, about 0.006 wt%, about 0.007 wt%, about 0.008 wt%, about 0.009 wt%, about 0.01 wt%, about 0.02 wt%, about 0.03 wt%, about 0.04 wt%, about 0.05 wt%, about 0.06 wt%, about 0.07 wt%, about 0.08 wt%, about 0.09 wt%, about 0.1 wt%, about 0.2 wt%, about 0.3 wt%, about 0.4 wt%, about 0.5 wt%, about 0.6 wt%, about 0.7 wt%, about 0.8 wt%, about 0.9 wt%, about 1 wt%, about 2 wt%, about 3 wt%, about 4 wt%, about 5 wt%, about 6 wt%, about 7 wt%, about 8 wt%, about 9 wt%, about 10 wt%, about 11 wt%, about 12 wt%, about 13 wt%, about 14 wt%, about 15 wt%, about 16 wt%, about 17 wt%, about 18 wt%, about 19 wt%, about 20 wt%, about 21 wt%, about 22 wt%, about 23 wt%, about 24 wt%, about 25 wt%, about 26 wt%, about 27 wt%, about 28 wt%, about 29 wt%, about 30 wt%, about 31 wt%, about 32 wt%, about 33 wt%, about 34 wt%, about 35 wt%, about 36 wt%, about 37 wt%, about 38 wt%, about 39 wt%, about 40 wt%, about 41 wt%, about 42 wt%, about 43 wt%, about 44 wt%, about 45 wt%, about 46 wt%, about 47 wt%, about 48 wt%, about 49 wt%, about 50 wt%, about 55 wt%, about 60 wt%, about 65 wt%, about 70 wt%, about 75 wt%, and the like. In addition, particular aspects of the disclosure include wt% values in a range formed by the combination of any of the above values.

In addition, the food component may be present in an amount of, for example but not by way of limitation, about 10 wt%, about 11 wt%, about 12 wt%, about 13 wt%, about 14 wt%, about 15 wt%, about 16 wt%, about 17 wt%, about 18 wt%, about 19 wt%, about 20 wt%, about 21 wt%, about 22 wt%, about 23 wt%, about 24 wt%, about 25 wt%, about 26 wt%, about 27 wt%, about 28 wt%, about 29 wt%, about 30 wt%, about 31 wt%, about 32 wt%, about 33 wt%, about 34 wt%, about 35 wt%, about 36 wt%, about 37 wt%, about 38 wt%, about 39 wt%, about 40 wt%, about 41 wt%, about 42 wt%, about 43 wt%, about 44 wt%, about 45 wt%, about 46 wt%, about 47 wt%, about 48 wt%, about 49 wt%, about 50 wt%, about 51 wt%, about 52 wt%, about 53 wt%, about 54 wt%, about 55 wt%, about 56 wt%, about 57 wt%, about 58 wt%, about 59 wt%, about 60 wt%, about 61 wt%, about 62 wt%, about 63 wt%, about 64 wt%, about 65 wt%, about 66 wt%, about 67 wt%, about 68 wt%, about 69 wt%, about 70 wt%, about 71 wt%, about 72 wt%, about 73 wt%, about 74 wt%, about 75 wt%, about 76 wt%, about 77 wt%, about 78 wt%, about 79 wt%, about 80 wt%, about 81 wt%, about 82 wt%, about 83 wt%, about 84 wt%, about 85 wt%, about 86 wt%, about 87 wt%, about 88 wt%, about 89 wt%, about 90 wt%, about 91 wt%, about 92 wt%, about 93 wt%, about 94 wt%, about 95 wt%, about 96 wt%, about 97 wt%, about 98 wt%, about 99 wt%, and the like. In addition, particular aspects of the disclosure include wt% values in a range formed by the combination of any of the above values.

In addition, any wt% ratio of shear sensitive thickener to food component may be utilized in accordance with the disclosure, so long as the smooth, shelf-stable food product can be formed therefrom. Non-limiting examples of wt% ratios of shear sensitive thickener to food component include about 0.001:1, about 0.002:1, about 0.003:1, about 0.004:1, about 0.005:1, about 0.006:1, about 0.007:1, about 0.008:1, about 0.009:1, about 0.01:1, about 0.015:1, about 0.02:1, about 0.025:1, about 0.03:1, about 0.035:1, about 0.04:1, about 0.045:1, about 0.05:1, about 0.055:1, about 0.06:1, about 0.065:1, about 0.07:1, about 0.075:1, about 0.08:1, about 0.085:1, about 0.09:1, about 0.095:1, about 0.1:1, about 0.15:1, about 0.2:1, about 0.25:1, about 0.3:1, about 0.35:1, about 0.4:1, about 0.45:1, about 0.5:1, about 0.55:1, about 0.6:1, about 0.65:1, about 0.7:1, about 0.75:1, about 0.8:1, about 0.85:1, about 0.9:1, about 0.95:1, about 1:1, about 2:1, about 3:1, about 4:1, about 5:1, about 6:1, about 7:1, about 8:1, about 9:1, about 10:1, and the like. In addition, particular aspects of the disclosure include wt% ratios in a range formed by the combination of any of the above values.

The step of aseptically homogenizing the mixture comprising the at least one food component and the at least one shear sensitive thickener can be carried out using any homogenization technique as would be known in the field for homogenizing the food components as described herein. Various homogenization techniques are well known in the art, and thus no further description thereof is deemed necessary.

The step of aseptically thermally processing the mixture comprises heating the mixture from 132.2 °C (270 °F) to 143.3 °C (290 °F). For example but by now way of limitation, the mixture may be heated to 132.2 °C (270 °F), 135 °C (275 °F), 137.8 °C (280 °F), 140.6 °C (285 °F), 143.3 °C (290 °F).

In an embodiment of the invention, the method of heating the mixture during the aseptic thermal processing may use at least one of a direct heating method and/or an indirect heating method. The direct heating method may be, for example but without limitation, steam injection, steam infusion, and/or any other method of direct heating as would be known in the field. The indirect heating method may use, for example but without limitation, a plate heat exchanger, a tubular heat exchanger, a scraped surface heat exchanger, and/or any other method or mechanism of indirect heating as would be known in the field. In one aspect, the food product is aseptically thermally processed by ultrahigh temperature processing. These various heating methods are well known in the art, and thus no further description thereof is deemed necessary.

In one aspect of the disclosure the mixture of the at least one food component and the at least one shear sensitive thickener has a pH greater than 4.6, which can be classified as a "low acid" food product. Low acid food products may be aseptically thermally processed by heating the mixture of the at least one food component and the at least one shear sensitive thickener at a temperature in a range of from 121.5 °C (250 °F) to 162.8 °C (325°F), or from 132.2 °C (270 °F) to 143.3 °C (290 °F).

In another aspect of the disclosure, the mixture of the at least one food component and the at least one shear sensitive thickener has a pH in a range of from about 2.5 to 4.6, which can be classified as an "acid" food product. Acid food products may be aseptically thermally processed by heating the mixture of the at least one food component and the at least one shear sensitive thickener at a temperature in a range of from about 79.4 °C (175 °F) to 121.5 °C (250 °F), or from 93.3 °C (200 °F) to 110 °C (230 °F).

According to the invention, the method of producing a smooth, shelf-stable food product comprises the step of at least partially cooling the mixture comprising at least one of the above-described food components and the at least one shear sensitive thickener after the step of aseptically thermally processing the mixture and prior to the step of aseptically homogenizing the mixture, wherein the mixture is at least partially cooled to a temperature in the range of 48.9°C (120°F) to 71.1°C (160°C). In an embodiment of the invention, the step of at least partially cooling the mixture may include at least partially cooling the mixture to a temperature such that the fats in the at least one food component are still in liquid form. The mixture may be partially cooled to any temperature that allows the food product subsequently produced to have the characteristics as described herein. For example, but not by way of limitation, the mixture may be partially cooled to a temperature of 48.9 °C (120 °F), 51.7 °C (125 °F), 54.4 °C (130 °F), 57.2 °C (135°F), 60 °C (140 °F), 62.8 °C (145 °F), 65.6°C (150 °F), 68.3°C (155 °F), 71.1 °C (160 °F) and the like.

In an embodiment according to the invetion, the method of at least partially cooling the mixture comprising the at least one food component and the at least one shear sensitive thickener uses at least one of a direct cooling method and/or an indirect cooling method. The direct cooling method may use, for example but without limitation, a flash or vacuum chamber and/or any other method or mechanism for cooling the mixture as would be known in the field. The indirect cooling method may use, for example but without limitation, a heat exchanger and/or any other method or mechanism for cooling the mixture as would be known in the field. Various types of cooling methods are well known in the art, and thus no further description thereof is deemed necessary.

In one aspect of the disclosure, the method of producing a smooth, shelf-stable food product, as described in any of the above-recited aspects, may further comprise a step wherein the at least one food component is heated prior to being mixed with the at least one shear sensitive thickener to form the mixture. The at least one food component may be mixed with the at least one shear sensitive thickener by any method as would be known in the field.

In an embodiment according to the invention, the method of producing a smooth, shelf-stable food product, as described in any of the above-recited aspects, may further comprise a step wherein the food product (i.e., the mixture of the at least one food component and the at least one shear sensitive thickener) is packaged into one or more packages after the step of aseptically homogenizing the mixture comprising the at least one food component and the at least one shear sensitive thickener. The method of packaging the food product may be any method as would be known in the field. Various types of packaging methods are well known in the art, and thus no further description thereof is deemed necessary.

Thus, in accordance with the invention there has been provided a method for producing smooth, shelf-stable food products comprising at least one food component and at least one shear sensitive thickener, that fully satisfy the objectives and advantages set forth herein above.

## Claims

1. A method of producing a smooth, shelf-stable food product, which is shelf-stable for at least two months comprising:
aseptically thermally processing a mixture comprising at least one food component and at least one shear sensitive thickener,
wherein the at least one food component is a dairy product selected from the group consisting of pudding, yogurt, sour cream, buttermilk, and combinations thereof,
wherein the at least one food component has a protein content of 2 wt% or greater, wherein the shear sensitive thickener is citrus fiber, and
wherein the step of aseptically thermally processing the mixture comprises heating the mixture at a temperature in a range of from 132.2°C (270°F) to 143.3°C (290°F); at least partially cooling the mixture after the step of aseptically thermally processing the mixture,
wherein the mixture is at least partially cooled to a temperature in a range of from 48.9°C (120°F) to 71.1°C (160°F); and aseptically homogenizing the mixture after the step of cooling the mixture, the obtained mixture being the food product.

2. The method of claim 1, wherein the at least one food component is baby food.

3. The method of any of claims 1 to 2, wherein the at least one food component has been fortified with at least one of a vitamin and a mineral, preferably such that the at least one vitamin and/or mineral comprises more than 5% daily value equivalent of the at least one vitamin and/or mineral.

4. The method of any of claims 1 to 5, wherein the mixture further comprises additives selected from the group consisting of sweeteners, flavors, colors, acids, acidity regulators, anticaking agents, antifoaming agents, antioxidants, bulking agents, color retention agents, emulsifiers, flavor enhancers, flour treatment agents, glazing agents, humectants, preservatives, stabilizers, thickeners, and combinations thereof.

5. The method of any of claims 1 to 4, wherein the step of aseptically thermally processing the mixture uses at least one of a direct heating method and an indirect heating method.

6. The method of any of claims 1 to 5, wherein the mixture is at least partially cooled to a temperature such that fats in the at least one food component are still in liquid form.

7. The method of any of claims 1 to 6, wherein the step of at least partially cooling the mixture uses at least one of a direct cooling method and an indirect cooling method.

8. The method of any of claims 1 to 7, wherein the mixture is aseptically packaged into one or more packages after the step of aseptically homogenizing the mixture.

## Patentansprüche

1. Verfahren zur Herstellung eines glatten, lagerstabilen Nahrungsmittelprodukts, das für mindestens zwei Monate lang lagerstabil ist, umfassend:
aseptisches thermisches Verarbeiten einer Mischung, die mindestens eine Nahrungsmittelkomponente und mindestens ein scherempfindliches Verdickungsmittel umfasst,
wobei die mindestens eine Nahrungsmittelkomponente ein Milchprodukt ist, das ausgewählt ist aus der Gruppe bestehend aus Pudding, Joghurt, Sauerrahm, Buttermilch und Kombinationen davon,
wobei der mindestens eine Nahrungsmittelbestandteil einen Proteingehalt von 2 Gew.-% oder mehr aufweist, wobei das scherempfindliche Verdickungsmittel Zitrusfaser ist, und
wobei der Schritt des aseptischen thermischen Verarbeitens der Mischung das Erwärmen der Mischung auf eine Temperatur in einem Bereich von 132,2 °C (270 °F) bis 143,3 °C (290 °F) umfasst;
zumindest teilweises Kühlen der Mischung nach dem Schritt des aseptischen thermischen Verarbeitens der Mischung,
wobei die Mischung zumindest teilweise auf eine Temperatur in einem Bereich von 48,9 °C (120 °F) bis 71,1 °C (160 °F) gekühlt wird; und
aseptisches Homogenisieren der Mischung nach dem Schritt des Kühlens der Mischung, wobei die erhaltene Mischung das Nahrungsmittelprodukt ist.

2. Verfahren nach Anspruch 1, wobei die mindestens eine Nahrungsmittelkomponente Babynahrung ist.

3. Verfahren nach einem der Ansprüche 1 bis 2, wobei die mindestens eine Nahrungsmittelkomponente mit mindestens einem von einem Vitamin und einem Mineral angereichert wurde, vorzugsweise derart, dass das mindestens eine Vitamin und/oder Mineral mehr als 5 % Tageswertäquivalent des mindestens einen Vitamins und/oder Minerals umfasst.

4. Verfahren nach einem der Ansprüche 1 bis 5, wobei die Mischung ferner Zusatzstoffe umfasst, die ausgewählt sind aus der Gruppe bestehend aus Süßungsmitteln, Geschmacksstoffen, Farbstoffen, Säuren, Säureregulatoren, Antibackmitteln, Antischäumungsmitteln, Antioxidantien, Füllstoffen, Farbrückhaltemitteln, Emulgatoren, Geschmacksverstärkern, Mehlbehandlungsmitteln, Glasurmitteln, Feuchthaltemitteln, Konservierungsmitteln, Stabilisatoren, Verdickungsmitteln und Kombinationen davon.

5. Verfahren nach einem der Ansprüche 1 bis 4, wobei der Schritt des aseptischen thermischen Verarbeitens der Mischung ein direktes Wärmverfahren und/oder ein indirektes Wärmverfahren verwendet.

6. Verfahren nach einem der Ansprüche 1 bis 5, wobei die Mischung zumindest teilweise auf eine Temperatur gekühlt wird, bei der Fette in der mindestens einen Nahrungsmittelkomponente noch in flüssiger Form vorliegen.

7. Verfahren nach einem der Ansprüche 1 bis 6, wobei der Schritt des zumindest teilweisen Kühlens der Mischung ein direktes Kühlverfahren und/oder ein indirektes Kühlverfahren verwendet.

8. Verfahren nach einem der Ansprüche 1 bis 7, wobei die Mischung nach dem Schritt des aseptischen Homogenisierens der Mischung aseptisch in eine oder in mehrere Verpackungen verpackt wird.

## Revendications

1. Procédé de production d'un produit alimentaire à longue durée de conservation, onctueux, qui est à longue durée de conservation pendant au moins deux mois comprenant :
le traitement thermique aseptique d'un mélange comprenant au moins un composant alimentaire et au moins un épaississant sensible au cisaillement
dans lequel l'au moins un composant alimentaire est un produit laitier choisi dans le groupe constitué de pudding, yaourt, crème acide, babeurre, et des combinaisons de ceux-ci,
dans lequel l'au moins un composant alimentaire a une teneur en protéines de 2 % en poids ou plus, dans lequel l'épaississant sensible au cisaillement est de la fibre d'agrume, et
dans lequel l'étape de traitement thermique aseptique du mélange comprend le chauffage du mélange à une température dans une plage allant de 132,2 °C (270 °F) à 143,3 °C (290 °F) ; le refroidissement au moins partiel du mélange après l'étape de traitement thermique aseptique du mélange, dans lequel le mélange est au moins partiellement refroidi à une température dans une plage allant de 48,9 °C (120 °F) à 71,1 °C (160 °F) ; et l'homogénéisation aseptique du mélange après l'étape de refroidissement du mélange, le mélange obtenu étant le produit alimentaire.

2. Procédé selon la revendication 1, dans lequel l'au moins un composant alimentaire est un aliment pour bébés.

3. Procédé selon l'une quelconque des revendications 1 à 2, dans lequel l'au moins un composant alimentaire a été enrichi avec au moins l'un parmi une vitamine et un minéral, de préférence de telle sorte que l'au moins un vitamine et/ou minéral comprend plus de 5 % de la valeur quotidienne équivalente de l'au moins un vitamine et/ou minéral.

4. Procédé selon l'une quelconque des revendications 1 à 5, dans lequel le mélange comprend en outre des additifs choisis dans le groupe constitué d'édulcorants, arômes, colorants, acides, régulateurs d'acidité, agents anti-agglomération, agents antimousses, antioxydants, agents gonflants, agents de rétention de couleur, émulsifiants, rehausseurs d'arôme, agents de traitement de farine, agents de glaçage, humectants, conservateurs, stabilisants, épaississants, et des combinaisons de ceux-ci.

5. Procédé selon l'une quelconque des revendications 1 à 4, dans lequel l'étape de traitement thermique aseptique du mélange utilise au moins l'un parmi un procédé de chauffage direct ou un procédé de chauffage indirect.

6. Procédé selon l'une quelconque des revendications 1 à 5, dans lequel le mélange est au moins partiellement refroidi à une température telle que les matières grasses dans l'au moins un composant alimentaire sont toujours sous forme liquide.

7. Procédé selon l'une quelconque des revendications 1 à 6, dans lequel l'étape de refroidissement au moins partiel du mélange utilise au moins l'un parmi un procédé de refroidissement direct et un procédé de refroidissement indirect.

8. Procédé selon l'une quelconque des revendications 1 à 7, dans lequel le mélange est emballé de façon aseptique dans un ou plusieurs emballages après l'étape d'homogénéisation aseptique du mélange.
